# EUROPEAN PATENT APPLICATION

(11) **EP 4 358 341 A1**
(43) Date of publication of application: **24.04.2024**
(21) Application number: 22203118.9
(22) Date of filing: 21.10.2022
(51) Int. Cl.: H02J 3/38, B63B 35/44, F03D 9/25, H05K 7/14

(54) **SYSTEM FOR HIGH ENERGY DEMAND SERVICES IN AN OFFSHORE ENERGY GENERATION INSTALLATION**

(71) Applicant: Ørsted Wind Power A/S, 7000 Fredericia (DK); Earth, Wind & Power AS, 0273 Oslo (NO)
(72) Inventor: Innocenti, Davide, DK7000 Fredericia (DK); Harnett, Patrick, DK7000 Fredericia (DK)
(74) Representative: Lewis Silkin LLP

(57) **Abstract**

A system (10) comprises at least one generator (11) and a substation (13) for distributing generated electricity to an electrical network (17). A power carrying link (12) from the generators (11) to the substation (13) is also connected to at least one service module (18), that incorporates equipment for performing an power consuming service unrelated to operation of the wind turbine and network. The service may be a computing function and benefits from being located "behind-the-meter" where cheaper energy costs are possible. For example, electricity generated by the wind turbines can be routed directly to the module(s) for use. A wind turbine generator foundation or a standalone platform configured to receive a removeable service module is also described.

## Description

The present invention relates to a system incorporating a high energy demand service, such as a large scale computing centre (e.g. data centre service, a high performance computing centre, an edge computing centre, and cloud computing services), for implementation with a electricity generation means. The present invention is particularly relevant to a system for use with an offshore structure forming part of an offshore renewable energy installation, such as an offshore wind farm. Such large scale computing centres typically include one or more service modules having a high energy demand, and in the context of high performance computing, are configured for performing computational functions and communicating with the internet for delivery of those services. However, the inventive concept may be broadly applied to other service modules with high energy demands.

By way of background, large scale computing centres are computer environments where processing power, memory, data storage and networks are assembled at scale to tackle very high demand computational tasks beyond the capabilities of everyday computers. As such, these computing centres provide a dedicated space for hosting IT equipment, servers and data storage for implementing services with high computational demands. Where such centres are used to implement data centre services they typically require a very high reliability of continuous power supply, a reliable cooling system, a very high reliability and redundancy of fibre network and a high level of accessibility and on-site support, so that an organization can access the data centre service whenever it is needed.

In contrast to a data centre's requirement for continually on-demand data access, large scale computing centres may also implement a high performance computing (HPC) service that is concerned with the ability to process data and perform complex calculations at high speeds, e.g. on a specific job/batch basis, such as for heavy simulations, engineering design, modelling of 3D protein structures, financial modelling, Al training, blockchain, rendering, cryptomining, etc. In the case of HPC, power consumption is relatively flexible depending on availability of the resource and market price. In some instances, a single fibre connection may also be acceptable, although additional connections such as satellite or cellular connections may also be available for redundancy. HPC applications in particular may be unmanned and set up in a remote location, with limited scheduled maintenance. There is continual growth in the area of HPC as demand for such services increases.

In consideration of the above, an opportunity has been identified for locating a high energy demand service (such as a high performance computing service) with access to an energy source, at a remote location, where any associated maintenance limitations are accepted in relation to the selected service.

Particularly, the present invention provides a system that may take advantage of a "green" electricity generation device, e.g. in a remote location, for powering a high energy demanding service at that location, and particularly large scale computing.

A broad aspect of the invention is outlined by appended claim 1. In this form, the system may comprise: an offshore electricity generation plant, such as an wind turbine generator at a remote location, a meter for measuring the supply of generated energy to a distribution grid, preferably a communication link for connection to a network, and at least one service module incorporating equipment for performing a power consuming service unrelated to/independent of the energy generation plant and electrical grid, wherein the service module is connected to the electricity generation plant, upstream of the meter (i.e. behind the meter), for receiving energy therefrom and also connected to the communication link. The meter may be incorporated into an electrical substation.

In one embodiment, the system further includes a cooling subsystem for connection to the at least one service module for cooling the equipment incorporated therein.

In one embodiment, connection to the at least one service module is by one or more interfaces. The interface may incorporate both electrical and communications connections and/or ports. For example, the interfaces may include electrical connection terminals and fibre optic and/or electromagnetic couplings. Mechanical interfaces may also be provided for fixing the service module to the mounting location.

In embodiments, the energy generation plant is a wind turbine generator (WTG), and preferably an offshore wind turbine generator. For example, the service module may be in a containerised form housing high performance computing hardware or other type of high energy demand service, supported by an offshore structure, such as a mount extending from a WTG or a substation associated with one or more WTGs. The service module may be "hooked up" (e.g. in a plug and play fashion) to a power supply associated with the one or more WTGs, as well as, in embodiments, a cooling system for supply of a cooling medium and/or a communication link. In alternative embodiments, the invention may be implemented using a dedicated platform, such as a monopile or other offshore structure supporting a platform onto which the service module is mounted. In embodiments, the mounting location may be provided as a floating platform on, for example, an adjacent vessel.

The service module may be lifted into place to the mount (which may be a platform or other structure configured to support/secure the module in place) from a transport means (e.g. ship). In this way, the service module may be removed from the mount as needed for maintenance or replacement at end of life. In embodiments, the mount may be a separate platform in the vicinity of the energy generation plant or elsewhere which is configured for receiving energy therefrom prior to metering and wider distribution to an associated electrical grid.

Accordingly, embodiments of the invention provide for a modular system for implementing high energy demand services in an offshore location supported by a renewable energy supply. This is advantageous because power supply demands may be met by the green energy supply available directly at source. Obtaining power in this way is known as "behind-the-meter" since delivery and consumption occur prior to the supply being metered as it is fed into an electricity grid. This is important because it avoids the associated levies/tariffs. Energy demands to the local service (which is expected to be independent of and not related to the business of energy generation itself) can be calculated and managed such that supply to an onshore destination is not compromised. For example, the local service may be supplied at times of high energy production or, at least, within specified limits of consumption. At the same time, because a proportion of the generated energy is consumed on-site, the load supplied to the grid via the substation is effectively reduced, thereby allowing the realised lifespan of the associated export cabling to potentially be extended.

The scenario presented may provide further benefits because, by locating the energy consuming service offshore and behind the meter, there is no need for a service provider to procure land and grid connection. Moreover, permits may not be required at all, or may be handled by the offshore developer. Furthermore, the offshore developer can provide logistics for installation and maintenance. In this regard, technicians may be available at an agreed time on site, as the location is already supported by service technicians, However, it is envisaged that operations are primarily remote and will require limited scheduled maintenance. Indeed, a service module can be designed to be unmanned with only periodic maintenance. Use of multiple service modules can ensure there is redundancy and, hence, availability of the service - such as HPC on batch data.

It is particularly noteworthy that existing offshore installations provide high-speed and secure digital infrastructure with access to dedicated fibre, i.e. a reliable communication link to the mainland and wider internet. Hence, data delivery is possible in normal use. In embodiments, satellite communications or cellular service may provide the primary communication link or be used as a back up. The service module will also benefit from existing security layers associated with the energy generation location. For example, for offshore locations, the inherent remoteness of the location may provide a first security layer, and typically access to the offshore platform or any service modules supported thereon may be further restricted by both mechanical barriers and electronic alarms.

As outlined herein, co-location of a use/service asset with a generation asset can have positive outcomes for developers, customers and society. For example, the invention results in: an ability to use energy that would otherwise be curtailed/lost due to bottlenecks, reduced competition for use of land onshore, and no additional costs for grid infrastructure upgrade.

While the motivating scenario for the present invention was the realisation that high performance computing services could be modularised and located at an offshore location with direct access to a power supply (combined with other benefits such as pre-existing communication links and access to sea water for cooling), there are other services that may benefit from an analogous configuration. For example, desalination/electrolysis, hydrogen production and carbon capture technologies presently known, or as may be proposed in the future.

In embodiments, the service module may further include an energy storage device (e.g. a battery or super capacitor) for providing a backup store energy for use if the supply is temporarily interrupted or reduced. As such, an uninterruptable power supply to the service module may be provided.

In a further broad aspect, there is provided a wind turbine generator (WTG), comprising: at least one service module incorporating equipment to perform an energy consuming service unrelated to operation of the wind turbine generator; a mount for removably receiving the at least one service module; a power distribution device for directing power to the at least one service module and for connection to a substation; a communication link incorporating a data connection to the at least one service module. The power distribution device may comprise a power outlet for delivering power to the service module.

In one form, the WTG further comprises a controller for receiving data through the communication link and managing the power distribution device to monitor and control power supply and consumption of the at least one service module. Particularly, where there is a plurality of service modules, the controller may identify each module and distribute power accordingly. The controller may be configured to throttle up and/or engage service modules as needed, dependent on power supply parameters and/or based on signals to/from the service module relating to customer demand. For example, in such a system, the controller may be connected over a communication channel to the service provider for receiving an input indicating customer demand. At the same time, the controller may be communicatively connected to the one or more generators for indicating the energy available for the service. For instance, the controller may receive a load capacity indicator input. The controller may then apply control logic to vary the processing capacity by changing the number and/or the processing rate of the service modules activated. As such, where customer demand or available energy is high, capacity in the system may be increased. Conversely, where customer demand or available energy is low, capacity in the system may be reduced. In more advanced embodiments, the controller may receive weather data inputs for identifying in advance when additional energy is likely to become available. This may be used, for instance, to provide capacity and/or pricing feedback to the service provider to allow the future available processing capacity to be tendered. Equally, in some embodiments, in response to service demand, the controller may transmit a power request to the one or more generators to vary the power generated (e.g. by varying blade pitch or curtailing individual wind turbine generators). Power supplied to a service module will be generally balanced by consideration of grid commitments via an export cable. In this respect, as a relatively lower power load is carried by the export cable due to a proportion of the generated load being consumed at the service module, the service life of the export cable may be extended. Furthermore, the controller may be configured to optimise, via a software management tool, power use across the local or wider system. A foundation, which may or may not be integrated with a WTG, is defined by appended claim 6.

A service module, e.g. as defined by claim 11, may be a separable and standalone component configured for operation at the wind turbine location or elsewhere in an energy generation network, while upstream of an electrical grid/metering by a power distribution company. The service module may include compatible interfaces for connection to a power supply from the power distribution device and the communication link, thereby providing for a "plug-and-play" functionality. Modules can be interchanged, maintained, swapped for repair or otherwise configured as needed to meet customer requirements.

In a particular embodiment of the invention there is provided an ISO container configured to house high performance computing equipment, comprising: an attachment surface for attachment to a mount, an electrical connection for supplying power to the equipment, a communication connection for data transfer and a fluid connection for receiving a cooling medium for cooling the equipment. In this way, a service module as described herein is intended to be a pre-fabricated unit which can be fitted out according to specifications of the service provider or its customer, subsequently supplied for plugging into the energy generation system. In one form the cooling medium is sea water.

In all embodiments, a cooling medium (e.g. liquid, air or other gas) may be pumped from an external source for use by the service module, e.g. water pumped through a conduit extending into surrounding ocean or a separate heat exchanger circuit. The coolant, having taken on excess heat, can then be returned to the ocean, preferably after further cooling has taken place, so as not to impact the local marine environment with an increased temperature. In a particular form, the system may incorporate an underwater heat exchanger having a cooling media isolated from the sea water. Such a system may be useful for cooling electronic devices, while avoiding corrosion, etc.

A pre-fabricated service module of the type described may be hooked up (power, data and/or coolant) at any suitable location associated with the power generation system where it can take advantage of behind-the-meter energy supply. Such locations may be a dedicated monopile platform for hosting multiple service modules, adjacent an WTG or substation or both.

The primary identified application for the present invention is operation of high performance computing equipment. However, high performance computing can be interpreted broadly to also encompass functions associated with data centres. Likewise, other applications for a service module that is not otherwise concerned with energy generation itself include mini electrolysis or other forms of desalination plant, carbon capture, or other industrial processes that are energy dense relative to a small footprint.

The present invention will be described by reference to the accompanying drawings, wherein:
Figure 1 illustrates a schematic overview of a first embodiment of system according to the invention; and
Figure 2 illustrates a schematic overview of various implementation examples.

The following description presents exemplary embodiments and, together with the drawings, serves to explain principles of the invention. However, the scope of the invention is not intended to be limited to the precise details of the embodiments or exact adherence with all features and/or method steps, since variations will be apparent to a skilled person and are deemed also to be covered by the description. Terms for components used herein should be given a broad interpretation that also encompasses equivalent functions and features. In some cases, several alternative terms (synonyms) for structural features have been provided but such terms are not intended to be exhaustive. Descriptive terms should also be given the broadest possible interpretation.

The description herein refers to embodiments with particular combinations of steps or features, however, it is envisaged that further combinations and cross-combinations of compatible steps or features between embodiments will be possible. Indeed, isolated features may function independently as an invention from other features and not necessarily require implementation as a complete combination.

It will be understood that the illustrated embodiments show applications only for the purposes of explanation. In practice, the invention may be applied to many different configurations, where the embodiment is straightforward for those skilled in the art to implement.

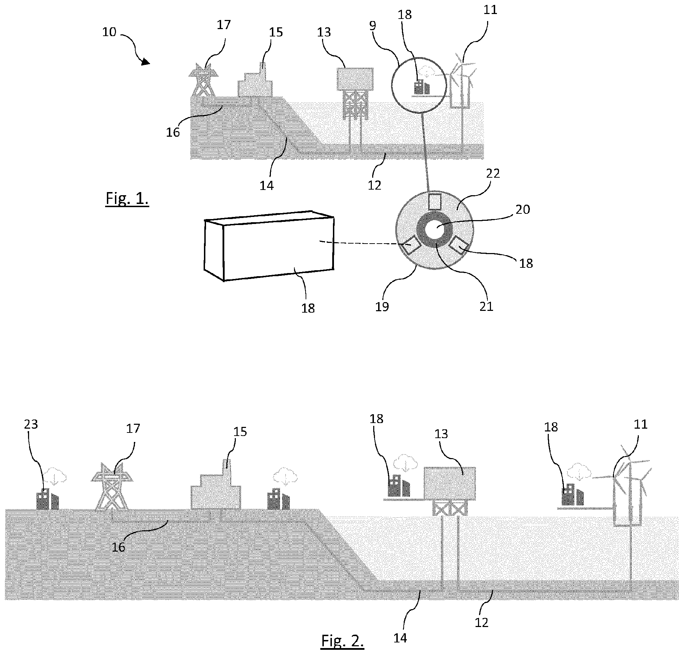

Figure 1 provides an overview of a system according to the invention. For example, a typical layout of a system 10 may feature an offshore location associated with one or more wind turbine generators (WTGs) 11, electrically/data connected via a cable 12 to an offshore substation 13 that, in turn, is electrically/data connected via a cable 14 to an onshore substation 15 for subsequent delivery of an electrical supply via cable 16 to a grid 17.

In the schematic configuration of Figure 1, a power consuming load, i.e. service module 18, is located at or adjacent the WTGs 11, shown in more detail within a zoomed-in encircled portion 19. Particularly, circle 19 illustrates a plan view of a monopile 20, surrounded by a WTG platform 21. An extended platform 22 provides a mounting platform/location for one or more power consuming service modules 18. It will be understood that the foundation, exemplified by a monopile 20 in this illustrative embodiment, may instead be a jacket, gravity foundation, floating foundation or any other foundation.

A service module 18 is shown in the form of a shipping container within which a power consuming service may be housed. By way of example, a module 18 may be comprised of a 12.2m long x 2.4m wide x 2.6m high container (i.e. a 40ft shipping container). The container may house computing or other energy intensive equipment, uninterruptible power supply (UPS) and, in many cases, a cooling unit or provision to receive coolant. It will be understood that the scope of equipment may change depending on the service to be provided by the service module, as well as in accordance with new technological developments that will be available and relevant at the time of operational implementation.

The platform/installation and service module may include mating interfaces to facilitate electrical connection and access to data communication. In the case of HPC, the relevant equipment to perform computing, i.e the container itself, all the equipment inside of it and all auxiliary equipment such as UPS and cooling, may be the service module operator/owner's responsibility.

The electrical interface may be a physical connection to the wind farm electricity network and its control system interfaces. While the energy supplier may be responsible for connections to these systems, the module operator may be responsible for ensuring compatibility. It is expected that the electrical interface will be at, e.g. the 400V side of the transformer for the supply of power with AC at 50Hz.

The offshore data interface may be the access point to dark fibre contained in an array cable at the platform location. A further access point to the fibre will be onshore at an end point of the offshore export cable. It will likely be the operator's responsibility to make arrangements with a relevant network provider from the onshore access point onwards.

It is noteworthy that the example of Figure 1 and detail 19 is for illustrative purposes only. Further investigation may determine optimum configurations for modular service location and downstream service connection.

A general example of implementation of the system and method of the invention can be described as follows:
1. An offshore developer may be responsible for providing a platform either as an extension to a WTG position or as a separate platform within a wind farm site sufficiently large to host one or more service modules 18.
2. One or more service modules 18, intended for a specific use not related to energy production, are installed upon the platform, e.g. by hoisting from a ship transport.
3. The offshore wind developer may then provide the required power connection and, in a preferred form, access to fibre for connectivity in line with agreed parameters.
4. Other operational services may be connected to the service module. In the case of a high performance computing service module, this may include a coolant system and/or cooling medium such as sea water pumped through a heat exchanger. A pumping system and coolant conduit will likely be assembled and provided by the offshore wind developer since it is external to service module operation. Heated water output from a service module may be fed to a heat exchanger to dissipate the heat into the air or may, in some scenarios be sprayed into the air downwind of the installation to dissipate heat collected from the module.
5. During operational life of the service module the offshore wind developer may be responsible for the delivery of electricity as agreed and other external factors, whereas the service module may be owned by a third party that is responsible for its contents and upkeep.

It is envisaged that the service equipment will be constructed in modular form onshore. A containerised solution can be transported from a coastal harbour to the offshore platform, where installation will take place.

The service module operator may be responsible for testing and commissioning the system in an offshore environment. The service, e.g. computing equipment, is expected to be remotely operated by its owner/stakeholder while the wind farm is operated remotely by the WTG's control operation.

Scheduled and unscheduled maintenance services may be provided, along with eventual decommissioning, dismantling and recycling. A decommissioned container may be transported back to shore cost effectively with other routine maintenance service associated with the WTG.

The broad inventive concept described herein envisages implementing various combinations of system capability in different configurations. For example, while an offshore HPC system (for powering by behind-the-meter renewable energy) served as a genesis point for the invention, it is not limited only to this implementation. Indeed, the invention may broadly be considered a containerised computing service module (e.g. in the sense of HPC or more general data/server applications) adapted for "plug-and-play" operation directly with or adjacent, downstream of a renewable energy source. The invention is scalable and may adapt to the size of the wind farm site. In certain implementations, a plurality of containers may be mounted on a separate platform to a WTG. The platform may be specially adapted to receive multiple containers and utilise a common electrical/data connection interface to/from a WTG or cluster of WTGs. For example, the size and shape of the platform may be configured to allow an array of service module containers to be supported. Equally, the platform may include a frame providing a plurality of mounting locations for arranging containers vertically (e.g. in a stacked arrangement). In arrangements having multiple containers, an electrical and communication hub may be provided to connect each of the containers to the electrical and data connection interfaces.

As mentioned above, service modules may be stacked vertically to reduce footprint on a platform. In such arrangements, provision may be made to allow specific service modules to be removed from the stack for replacement. For example, more than one stacking location may be provided to allow service modules to be moved to adjacent stacks to access modules beneath.

In any operational configuration, control of the locally generated power supply to one or more service containers can be managed as necessary, e.g. with regard to governmental guarantees to the grid and available supply. Service modules can be prioritised and activated (e.g. upon receiving a request/demand signal from a user) by a controller according to the operational parameters available at that moment or as predicted/monitored by measurable weather conditions and the like.

Accordingly, the boundary of the invention outlined in the present disclosure is wide and adaptable in many guises by a person skilled in the art with or without further inventive insight.

A particular aspect of relevance to an offshore environment is the provision for cooling high energy use equipment by way of the abundant supply of sea water. This is an unexpected benefit associated with locating HPC equipment in or by the sea. Such a concept may find application with other offshore facilities such as tidal power. In this context, the underlying concept is locating an energy dense power consume behind the meter (typically upstream of a substation).

Figure 2 illustrates alternative embodiments of the invention. Particularly, a WTG cluster 11 associated with a service module 18 is analogous to Figure 1, but alternative or additional locations of the service modules 18 are shown in Figure 2: e.g. adjacent an offshore substation 13, or on a separate foundation without a WTG (not shown). In most cases, the service unit 18 is in a location to benefit from behind-the-meter energy available from a renewable source. As an alternative, a HPC unit 23 may be located downstream of grid supply 17. The energy supply to this unit may be more continuously reliable, but often at a higher electricity cost. In certain configurations, a service module 18 may be connected to both supply types (grid and direct, being either side of a meter respectively) and configured to benefit from the lower direct price at most times of day, dependent on supply conditions, while switching to grid power in periods where a drop in direct supply is anticipated.

By way of summary, the present disclosure outlines a system for providing energy demanding services as part of a wind farm offering. A service module for performing the service is disclosed as a unit adapted for use in the system. Likewise, a WTG or separate platform is proposed which is configured to receive at least one service module and is provided with facilities for interacting with the module, e.g. a mounting platform, a connection for power supply and, in embodiments, a data connection. In a particular form the generator may also be combined with a coolant supply system compatible with the service module.

Herein, an exemplary system according to an embodiment of the invention comprises at least one wind turbine generator, and a substation for distributing generated electricity to an electrical network. A communication and power carrying link from the generators to the substation is also connected to at least one service module (housing equipment for performing an energy consuming service unrelated to operation of the wind turbine and network). The service may be high performance computing and benefits from being located "behind-the-meter" (i.e. at or upstream of the substation) where cheaper running costs are possible. For example, power generated by the WTG that would otherwise be curtailed or not produced due to various constraints can be routed directly to the module(s) for use. A wind turbine generator or a standalone platform configured to receive a removeable service module is also described, as well as an example service module configured for specific compatibility within in the system.

In an alternative aspect, the system as a whole may comprise: an energy generation plant, a substation for distributing generated energy from the energy generation plant to an electrical grid for use, a communication link from the energy generation plant and/or substation for connection to a network, and at least one service module incorporating equipment for performing an energy consuming service unrelated to operation of the energy generation plant and electrical grid, wherein the service module is electrically connected with the energy generation plant, behind the meter (e.g. upstream of the meter), for receiving energy therefrom and also connected to the communication link.

Furthermore, alternative methods of producing electricity for a service module (e.g a computing centre) may be envisioned. For example, the electrical power may be generated by photovoltaic cells, tidal power, kite power, or other renewable energy sources.

An aspect of the invention may be further summarised as a method of supplying high energy use services, comprising: electrically connecting a service module, that incorporates high energy use equipment, to an offshore power generator; wherein the electrical connection to the service module is located upstream of metered electricity supply to an electrical grid network; and controlling distribution of electricity between exporting to the electrical grid network or for use by the service module.

In a particular form, the service module may also be connected to a communication link established as part of the infrastructure of the energy generation plant provided as the power generator.

## Claims

1. A system comprising:
an offshore electricity generation plant having a generator output;
a meter connected to the generator output for metering generated electricity received therefrom for distribution to an electrical network; and
at least one service module incorporating equipment for performing a power consuming service unrelated to operation of the plant;
wherein the at least one service module is electrically connected to the generator output and is configured for receiving electricity therefrom independent of the generator output's connection to the meter.

2. The system of claim 1, wherein the offshore electricity generation plant comprises a wind turbine generator.

3. The system of claim 1 or 2, wherein the at least one service module comprises equipment for performing a large scale computing function.

4. The system of any preceding claim, further comprising a cooling system, configured for delivering a cooling medium to the at least one service module.

5. The system of any preceding claim, further comprising a communication link from the plant and/or a substation to a communication network, and a connection of the communication link to the at least one service module.

6. An offshore foundation for use in association with an offshore electricity generation plant having a generator output, the foundation comprising:
at least one mounting location for receiving a service module incorporating equipment for performing a power consuming service unrelated to the operation of the electricity generation plant;
a power outlet for connecting the generator output to a service module received at the mounting location for delivering power thereto, wherein the power outlet's connection to the generator output is independent of the generator output's connection to a meter used for metering generated electricity for distribution to an electrical network.

7. The offshore foundation of claim 6, further comprising a cooling outlet for delivering a cooling medium to a service module received at the mounting location.

8. The offshore foundation of claim 6 or 7, further comprising a communication link interface for connecting a service module received at the mounting location to a communications link.

9. The offshore foundation of any of claims 6 to 8, further comprising a controller for controlling the power supplied via the power outlet to the service module.

10. The offshore foundation of any of claims 6 to 9, wherein the foundation comprises a monopile, a jacket foundation, a gravity foundation or a floating foundation.

11. A service module configured for operation for use with the foundation of any of claims 6 to 10, comprising:
a mounting structure for mating with the mounting location; and
an electrical connector for connection to the power outlet when the mounting structure is mated with the mounting location.

12. The service module of claim 11, further comprising a data connector for connection to a communication link terminal provided on the foundation.

13. The service module of claim 11 or 12, further comprising a coolant connector for connection to a cooling system for receiving a cooling medium therefrom for cooling the equipment for performing the power consuming service.

14. A method of supplying high energy use services using power from an offshore electricity generation plant, the method comprising the steps of:
providing a service module incorporating equipment for performing a power consuming service unrelated to the operation of the offshore electricity plant at an offshore mounting location;
electrically connecting the service module to a generator output of the offshore electricity generation plant, and
wherein the service module's connection to the generator output is independent of the generator output's connection to a meter for metering generated electricity for distribution to an electrical network.

15. A method according to claim 15, further comprising the step of: controlling the distribution of electricity between export to the electrical network or for local use by the service module.
